(19) Europäisches Patentamt
European Patent Office
Office européen des brevets

(11) **EP 3 939 693 A2**

(12) **EUROPEAN PATENT APPLICATION**
published in accordance with Art. 153(4) EPC

(43) Date of publication:
**19.01.2022 Bulletin 2022/03**

(21) Application number: **20770229.1**

(22) Date of filing: **21.02.2020**

(51) International Patent Classification (IPC):
**B01D 71/02** (2006.01)　　**B01D 67/00** (2006.01)
**D01D 5/00** (2006.01)　　**B01D 61/14** (2006.01)
**C02F 1/44** (2006.01)

(52) Cooperative Patent Classification (CPC):
**B01D 61/14; B01D 67/00; B01D 71/02; C02F 1/44;
D01D 5/00**

(86) International application number:
**PCT/KR2020/002552**

(87) International publication number:
**WO 2020/184863 (17.09.2020 Gazette 2020/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.03.2019 KR 20190029146
16.10.2019 KR 20190128757
16.10.2019 KR 20190128761**

(71) Applicant: **KOREA INSTITUTE OF MATERIALS
SCIENCE**
**Gyeongsangnam-do 51508 (KR)**

(72) Inventors:
• **LEE, Jong Man**
**Changwon-si Gyeongsangnam-do 51511 (KR)**
• **SONG, In Hyuck**
**Changwon-si Gyeongsangnam-do 51471 (KR)**
• **HA, Jang Hoon**
**Changwon-si Gyeongsangnam-do 51507 (KR)**

(74) Representative: **Nony**
**11 rue Saint-Georges**
**75009 Paris (FR)**

(54) **CERAMIC NANOFIBER STRUCTURE, CERAMIC NANOFIBER SEPARATION MEMBRANE MODIFIED WITH PHOTOCATALYST, AND METHOD FOR MANUFACTURING SAME**

(57) Provided are: a ceramic nanofiber structure having excellent flexibility; a ceramic nanofiber membrane having excellent photocatalytic efficiency; and production methods therefor. The ceramic nanofiber structure according to one embodiment of the present disclosure includes a first ceramic component and a second ceramic component. It is possible to obtain a ceramic nanofiber structure having excellent flexibility by controlling the mean diameter of ceramic nanofibers to control the mean pore size and largest pore size between the nanofibers and adding a second ceramic component to reduce the grain size. The ceramic nanofiber membrane according to one embodiment of the present disclosure includes the ceramic nanofiber structure and an inorganic photocatalyst coating layer. It is possible to obtain a membrane which has excellent photodegradation ability for organic matters and may retain photocatalytic efficiency for a long period of time by including the ceramic nanofiber structure having excellent flexibility and the inorganic photocatalyst coating layer formed on the surface of the nanofiber.

[Fig. 1]

Step of preparing electrospinning solution — S110

Step of forming nanofibers — S120

Step of calcining nanofibers — S130

**Description**

**Technical Field**

This application claims the benefit of the filing dates of Korean Patent Application No. 10-2019-0029146 filed with the Korean Intellectual Property Office on March 14, 2019, Korean Patent Application No. 10-2019-0128757 filed with the Korean Intellectual Property Office on October 16, 2019, and Korean Patent Application No. 10-2019-0128761 filed with the Korean Intellectual Property Office on October 16, 2019, the entire contents of which are incorporated herein by reference.

The present disclosure relates to a ceramic nanofiber structure, a ceramic nanofiber membrane modified with a photocatalyst, and production methods therefor. Specifically, the present disclosure relates to a ceramic nanofiber structure having excellent flexibility, a ceramic nanofiber membrane modified with a photocatalyst, and production methods therefor.

**Background Art**

Nanofiber structures have attracted a lot of attention as materials for filters for air/water environment improvement, adsorbents, sensors, etc. due to the inherent characteristics of nanomaterials, such as a large specific surface area, high interconnectivity, and high permeability.

In particular, since polymer materials are conveniently dissolved in water or organic solvents, it is possible to produce various polymer material-based nanofiber structures by an electrospinning process.

However, the polymer material-based nanofiber structures have a big disadvantage in that they cannot be used in extreme environments because of their poor physical properties such as solvent resistance, heat resistance, acid resistance and base resistance.

A bulk-type ceramic nanofiber membrane produced using ceramic powder as a starting material by molding, drying and high-temperature sintering processes has a porosity of about 30 to 60%, but has a disadvantage in that the fluid (gas or liquid) permeability thereof is low because the open pore connectivity thereof is not excellent. As a result, high pressure is required for a smooth separation (or removal) process, and subsequent membrane contamination caused by repeated separation processes leads to results such as increased differential pressure (or increased energy consumption) and decreased separation efficiency.

To overcome this disadvantage, studies have been conducted to develop a ceramic nanofiber structure having excellent fluid permeability and separation properties, which is produced through (1) a sol-gel process, (2) an electrospinning process, and (3) a calcination process. However, due to the characteristic brittleness of ceramics, ceramic nanofibers calcined at high temperatures are easily broken or severely cracked even under mild stress, and thus are unsuitable for use as a membrane (or filter) for air/water purification.

Therefore, it is urgently necessary to develop a ceramic nanofiber structure which has excellent flexibility while overcoming the above-mentioned characteristic brittleness of ceramics.

Meanwhile, porous membranes modified with photocatalysts to improve the performance thereof have been proposed. The photocatalysts not only degrade non-biodegradable organic toxic substances through oxidation reactions, but also have excellent properties such as antibacterial and deodorizing properties. A typical photocatalyst is $TiO_2$ nanopowder, and many studies have been conducted to improve the efficiency of photocatalysts using nanoparticles of various materials, including $TiO_2$ nanopowder.

Photocatalytic nanoparticles are also used to photolyze a target organic matter by irradiation with ultraviolet or visible light in a state in which the photocatalytic nanoparticles are dispersed in a solution. In this case, problems arise in that it is necessary to recover the photocatalytic nanoparticles by a method such as centrifugation or filtration in order to reuse or transfer photocatalytic nanoparticles to the next process, and loss of the nanoparticles occurs in the recovery process, and thus the photocatalytic efficiency of the nanoparticles decreases during reuse. In addition, since the photocatalytic nanoparticles do not have an independent shape such as a membrane or a filter, the distribution of the nanoparticles varies depending on the size or shape of a container containing a solution of the nanoparticles. As a result, it is difficult for the photocatalytic nanoparticles to exhibit sufficient photocatalytic properties when the distance between the photocatalytic nanoparticles and a light source (ultraviolet or visible light) is long or when aggregation/precipitation of the nanoparticles occurs (in the absence of continuous stirring).

Since a conventional membrane (or filter) made of a polymer or ceramic material has a very small specific surface area compared to a ceramic nanofiber structure, it is difficult for the photocatalyst coated on the membrane to exhibit photocatalytic efficiency comparable to that of the photocatalyst coated on a ceramic nanofiber fiber. In addition, the membrane made of a polymer material has a disadvantage in that the membrane is damaged by radicals generated during a photocatalytic reaction.

## DISCLOSURE

### Technical Problem

An object of the present disclosure is to provide a ceramic nanofiber structure having excellent flexibility and a production method therefor.

Another object of the present disclosure is to provide a ceramic nanofiber membrane having excellent flexibility, a large specific surface area and excellent photocatalytic efficiency, and a production method therefor.

Objects of the present disclosure are not limited to the above-mentioned objects, and other objects and advantages of the present disclosure that are not mentioned may be understood from the following description and will be more clearly understood from examples of the present disclosure. It will also be readily understood that the objects and advantages of the present disclosure may be realized by the means and combinations thereof defined in the claims.

### Technical Solution

According to one aspect of the present disclosure, there is provided a ceramic nanofiber structure including ceramic nanofibers which contain a first ceramic component and a second ceramic component and have a mean diameter of 100 nm to 300 nm and a grain size of 5 nm to 15 nm, wherein the mean pore size between the ceramic nanofibers is 0.4 $\mu$m to 0.8 $\mu$m.

According to another aspect of the present disclosure, there is provided a ceramic nanofiber membrane including: the ceramic nanofiber structure; and an inorganic photocatalyst coating layer.

According to still another aspect of the present disclosure, there is provided a method for producing the ceramic nanofiber structure, the method including steps of: preparing an electrospinning solution containing a first ceramic precursor, a second ceramic precursor and a polymer binder; forming nanofibers by electrospinning the electrospinning solution; and calcining the nanofibers.

According to yet another aspect of the present disclosure, there is provided a method for producing the ceramic nanofiber membrane, the method including steps of: immersing the ceramic nanofiber structure in an inorganic photocatalyst precursor solution to obtain a ceramic nanofiber structure coated with the inorganic photocatalyst precursor; and calcining the ceramic nanofiber structure coated with the inorganic photocatalyst precursor.

### Advantageous Effects

According to one embodiment of the present disclosure, it is possible to obtain a ceramic nanofiber structure having excellent flexibility, which may ensure excellent durability when used for a membrane or the like.

In addition, the ceramic nanofiber structure according to one embodiment of the present disclosure has a mean pore size corresponding to the microfiltration and high-efficiency particulate air (HEPA) filtration grades, and thus is very effective in removing water/air pollutants.

According to one embodiment of the present disclosure, it is possible to obtain a ceramic nanofiber membrane having excellent gas and liquid permeability due to the characteristic better interconnectivity of nanofibers (than bulk-type ceramic or polymer membranes) and having excellent photocatalytic efficiency due to the relatively large specific surface area thereof.

Photocatalytic $TiO_2$ nanoparticles need to be subjected to a secondary process such as centrifugation or filtration for the reuse thereof, and the loss of the nanoparticles due to this secondary process may lead to reduction in the photocatalytic efficiency thereof. However, a technique of uniformly immobilizing the $TiO_2$ photocatalyst on a ceramic nanofiber structure can solve these problems at once.

This method of immobilizing a photocatalyst may increase the photocatalytic efficiency of the photocatalyst by preventing loss of the photocatalyst, and exhibit positive effects such as making the membrane hydrophilic or improving the contamination resistance of the membrane. Above all, the ceramic nanofiber membrane (or filter) coated with the photocatalyst has the advantage of being able to simultaneously achieve separation and degradation of water/air pollutants. In addition, the ceramic nanofiber membrane according to one embodiment of the present disclosure is highly flexible (not brittle) and thus very suitable for use as a filter material. Furthermore, the ceramic nanofiber membrane has a mean pore size corresponding to the microfiltration and high-efficiency particulate air (HEPA) filtration grades, and thus is very effective in removing water/air pollutants.

### Brief Description of Drawings

FIG. 1 is a flow chart showing the sequential steps of a method for producing a ceramic nanofiber structure according to one embodiment of the present disclosure.

FIG. 2 is a flow chart showing the sequential steps of a method for producing a ceramic nanofiber membrane according to one embodiment of the present disclosure.

FIG. 3 shows SEM images of ceramic nanofiber structures produced according to Examples 1 to 5 of the present disclosure and Comparative Examples 1 to 3.

FIG. 4 depicts graphs showing the results of XRD analysis of the ceramic nanofiber structures produced according to Examples 1 to 5 of the present disclosure and Comparative Example 1.

FIG. 5 depicts graphs showing the mean pore size (A) and largest pore size (B) of each of the ceramic nanofiber structures produced according to Examples 1 to 5 of the present disclosure and Comparative Examples 1 to 3.

FIG. 6 depicts graphs showing the flexibility depending on the precursor content for each of the ceramic nanofiber structure produced according to Examples 1, 2, 3 and 5 of the present disclosure and Comparative Example 1.

FIG. 7 is a graph showing the water permeability of the ceramic nanofiber structure produced according to each of Examples 1, 2, 3 and 5 of the present disclosure and Comparative Example 1.

FIG. 8 is a graph showing the gas permeability of each of the ceramic nanofiber structures produced according to Examples 1, 2, 3 and 5 of the present disclosure and Comparative Example 1.

FIG. 9 depicts graphs showing the nanoparticle rejection (%) of each of the ceramic nanofiber structure produced according to Examples 1, 2, 3 and 5 of the present disclosure and Comparative Example 1.

FIG. 10 shows SEM images of the ceramic nanofiber structure produced in Example 1 of the present disclosure and the ceramic nanofiber membranes produced according to Examples 6 to 8.

FIG. 11 is a graph showing the results of XRD analysis of the ceramic nanofiber structure produced in Example 1 of the present disclosure and the ceramic nanofiber membranes produced according to Examples 6 to 8.

FIG. 12 shows the results of EDS mapping of the ceramic nanofiber structure produced in Example 1 of the present disclosure and the ceramic nanofiber membrane produced according to Example 8.

FIG. 13 depicts graphs showing the mean pore size (A) and largest pore size (B) of each of the ceramic nanofiber structure produced in Example 1 of the present disclosure and the ceramic nanofiber membranes produced according to Examples 6 to 8.

FIG. 14 depicts graphs showing the mean pore size (A) and nanoparticle rejection (%) of each of the ceramic nanofiber structure produced in Example 1 of the present disclosure and the ceramic nanofiber membranes produced according to Examples 6 to 8.

FIGS. 15a to 15c are graphs showing the photocatalytic efficiency depending on light irradiation time for each of the ceramic nanofiber structure produced in Example 1 of the present disclosure and the ceramic nanofiber membranes produced according to Examples 6 to 8.

FIGS. 16a to 16c are graphs showing the photocatalytic efficiency depending on light irradiation time when $TiO_2$ nanopowder was added and when $TiO_2$ nanopowder was not added.

FIGS. 17a to 17c are graphs showing the photocatalytic efficiency depending on the number of uses of the ceramic nanofiber membrane produced according to Example 8 of the present disclosure.

## Best Mode

The above-described objects, features and advantages will be described below in detail with reference to the accompanying drawings, and accordingly, those of ordinary skill in the art to which the present disclosure pertains may easily practice the technical spirit of the present disclosure. In the following description, the detailed description of publicly-known technology related to the present disclosure will be omitted when it may unnecessarily obscure the subject matter of the present disclosure.

Hereinafter, the present disclosure will be described in detail with reference to the accompanying drawings.

A ceramic nanofiber structure according to one embodiment of the present disclosure includes ceramic nanofibers containing a first ceramic component and a second ceramic component and having a mean diameter of 100 nm to 300 nm and a grain size of 5 nm to 15 nm, wherein the mean pore size between the ceramic nanofibers is 0.4 µm to 0.8 µm.

According to one embodiment of the present disclosure, it is possible to obtain a ceramic nanofiber structure having excellent flexibility by including ceramic nanofibers having a mean diameter and a grain size within the above-described ranges and by having a pore size between the nanofibers within the above-described range.

The grain size of the ceramic nanofibers may be 5 nm to 15 nm, for example, 12.0 nm to 14.5 nm. When the grain size is within the above range, the ceramic nanofiber structure may have excellent flexibility.

According to one embodiment of the present disclosure, the mean pore size between the nanofibers may be 0.4 µm to 0.8 µm, and the largest pore size between the nanofibers may be 1.2 µm to 2.5 µm. Where the mean pore size and the largest pore size between the nanofibers are within the above ranges, the ceramic nanofiber structure may effectively remove pollutants when used as an air purification filter or a water purification membrane.

According to one embodiment of the present disclosure, the first ceramic component may include at least one selected from among zirconium (Zr), titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na). In addition, the second ceramic component may include: an amorphous ceramic material containing silicon (Si); and at least one selected from among titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na) .

As the ceramic fibers contain the first ceramic component and the second ceramic component, the ceramic nanofiber structure may have sufficient durability and flexibility when used for a membrane or the like.

According to one embodiment of the present disclosure, the ceramic nanofibers may contain the second ceramic component in an amount of 10 mol% to 50 mol%. For example, the second ceramic component may be contained in an amount of 30 mol% to 50 mol%, or 10 mol% to 30 mol%. As the second ceramic component is contained in an amount within the above range, it is possible to obtain ceramic nanofibers having excellent durability and flexibility.

According to one embodiment of the present disclosure, the ceramic nanofibers may further contain at least one ceramic stabilizing additive different from the first ceramic component and selected from among yttrium (Y), carbon (C), aluminum (Al), titanium (Ti), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), nickel (Ni), magnesium (Mg), phosphorus (P), boron (B), strontium (Sr), cobalt (Co), antimony (Sb), praseodymium (Pr), oxygen (O), nitrogen (N), and sodium (Na). For example, the ceramic stabilizing additive contributes to the formation of a stable cubic phase of zirconia.

According to one embodiment of the present disclosure, the ceramic nanofibers may contain yttria-stabilized zirconia-silica.

The ceramic nanofiber structure according to one embodiment of the present disclosure has a pore distribution corresponding to that of a microfiltration membrane for water purification and that of a HEPA grade filter for air purification, and is applicable as a filter material for water and air purification.

A ceramic nanofiber membrane according to another embodiment of the present disclosure includes: the ceramic nanofiber structure; and an inorganic photocatalyst coating layer. In this case, the pore distribution of the ceramic nanofiber structure is created by lamination between the nanofibers, and the ceramic nanofiber structure may remove water pollutants by microfiltration and remove air pollutants by HEPA filtration.

According to one embodiment of the present disclosure, for the inorganic photocatalyst coating layer, any material may be used without limitation as long as it contains a material known as an inorganic photocatalyst. Specifically, the inorganic photocatalyst coating layer may include: a first inorganic precursor including one selected from among titanium (Ti), zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na); and a second inorganic precursor including one selected from among zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na). For example, the inorganic photocatalyst coating layer may include $TiO_2$.

When the inorganic photocatalyst coating layer includes both the first inorganic precursor and the second inorganic precursor that are different from each other, it is possible to prevent excessive grain size growth that occurs when the inorganic photocatalyst coating layer is composed only of the first inorganic precursor. As a result, even when a new photocatalyst coating layer is formed on the ceramic nanofiber structure, it does not impair the flexibility of the nanofiber membrane, and the nanofiber membrane may retain its excellent flexibility well.

A photocatalyst is a material that absorbs light to generate a highly aggressive radical, thereby exhibiting a catalytic action, and is a material that helps induce an initial photolytic reaction. The photocatalyst may degrade non-biodegradable organic matters, including organic dyes, pharmaceuticals and biologics containing antibiotics, natural organic matters present in large amounts in surface water, and organic solvents, through oxidation reactions, and also has antifouling (or fouling resistant), antibacterial and deodorizing activities, etc.

According to one embodiment of the present disclosure, the inorganic photocatalyst coating layer may be formed on the surface of each ceramic nanofiber constituting the ceramic nanofiber structure, and may be formed to have a thickness of 1 nm to 200 nm.

Since the ceramic nanofiber membrane according to one embodiment of the present disclosure has a pore distribution corresponding to that of a microfiltration membrane for water/air purification and that of a HEPA filter, it may be applied to a water/air purification filter.

According to still another aspect of the present disclosure, the ceramic nanofiber structure is produced by a method including steps of: preparing an electrospinning solution containing a first ceramic precursor, a second ceramic precursor and a polymer binder; forming nanofibers by electrospinning the electrospinning solution; and calcining the nanofibers.

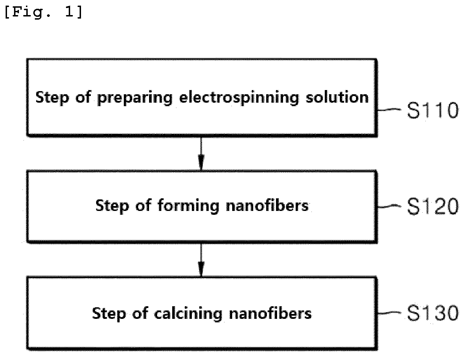

FIG. 1 is a flow chart showing the sequential steps of a method for producing a ceramic nanofiber structure according to one embodiment of the present disclosure.

Referring to FIG. 1, the method for producing a ceramic nanofiber structure according to one embodiment of the present disclosure includes steps of: (S110) preparing an electrospinning solution; (S120) forming nanofibers by electrospinning the electrospinning solution; and (S130) calcining the nanofibers.

First, in order to prepare an electrospinning solution, a first ceramic precursor, a second ceramic precursor and a polymer binder are mixed together. At this time, an organic solvent and an acid solution may be further added, and if necessary, a ceramic stabilizing additive may be further added to obtain a sol-type electrospinning solution (S110).

The first ceramic precursor, the second ceramic precursor, and the ceramic stabilizing additive are precursors of the main component forming the nanofibers, and when the ceramic nanofibers are formed, they may retain the excellent physical properties of the existing bulk ceramic material, such as heat resistance, solvent resistance, acid resistance and base resistance.

The organic solvent is not particularly limited as long as it is an organic solvent in which the first ceramic precursor and the second ceramic precursor are dissolved or dispersed. The organic solvent may include at least one of toluene, acetone, ethanol, methanol, normal-propanol, isopropyl alcohol, butanol, hexane, dimethylformamide, dimethyl sulfoxide, methylene chloride, and propylene glycol. In addition to the organic solvent, water may be further used.

The first ceramic precursor may include at least one selected from among zirconium (Zr), titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na). For example, the first ceramic precursor may be zirconium (IV) propoxide.

The first ceramic precursor may be contained in the electrospinning solution at a concentration of 1.0 M (328 g) to 2.5 M (819 g), for example, 1.6 M (524 g) to 2.0 M (655 g). When the first ceramic precursor is used at a concentration within the above range, the formation of the ceramic nanofibers by a sol-gel process and electrospinning may be sufficiently achieved.

The second ceramic precursor may include: an amorphous ceramic material containing silicon (Si); and at least one selected from among titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na) . Specifically, the second ceramic precursor may be tetraethyl orthosilicate.

The second ceramic precursor is a material that forms the second ceramic component which is amorphous.

The electrospinning solution may contain the first ceramic precursor and the second ceramic precursor at a molar ratio of 9:1 to 5:5, for example, 7:3 to 5:5.

When the first ceramic precursor and the second ceramic precursor are used at a molar ratio within the above range, the grain size of the ceramic nanofiber structure is reduced and surface defects thereof decrease, and thus it is possible to obtain a ceramic nanofiber structure that exhibits excellent flexibility by effectively dispersing external stress such as bending.

The second ceramic precursor may be contained in the electrospinning solution at a concentration of 0.1 M (31 g) to 2.5 M (521 g), for example, 0.7 M (44 g) to 2.0 M (417 g). When the second ceramic precursor is used at a concentration within the above range, the formation of the ceramic nanofibers by the sol-gel process and electrospinning may be sufficiently achieved.

The electrospinning solution may further contain a ceramic stabilizing additive precursor.

The ceramic stabilizing additive precursor may include at least one selected from among yttrium (Y), carbon (C), aluminum (Al), titanium (Ti), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), nickel (Ni), magnesium (Mg), phosphorus (P), boron (B), strontium (Sr), cobalt (Co), antimony (Sb), praseodymium (Pr), oxygen (O), nitrogen (N), and sodium (Na) . For example, the ceramic stabilizing additive precursor may be yttrium (III) nitrate hexahydrate.

The ceramic stabilizing additive precursor may be added at a concentration of 0.1 M (53 g) to 0.3 M (85 g) . When the ceramic stabilizing additive precursor is used at a concentration within the above range, a crystalline phase of the first ceramic precursor may be advantageously formed.

An acidic solution may be added to stabilize the electrospinning solution. The acidic solution may contain at least one of hydrochloric acid, nitric acid, acetic acid and sulfuric acid.

The polymer binder is a material that is mixed with the first ceramic precursor, the second ceramic precursor, and the ceramic stabilizing additive precursor, and serves to facilitate the electrospinning process.

The electrospinning solution may contain the polymer binder at a concentration of 0.06 mM to 0.09 mM. When the polymer binder is contained at a concentration within the above range, electrospinning may be easily performed.

The polymer binder may include at least one of cellulose-based resin, polyvinyl chloride resin, polyvinyl alcohol-based resin, polyvinylpyrrolidone-based resin, acrylic resin, vinyl acetate-acrylic acid ester copolymer resin, butyral resin, alkyd resin, epoxy resin, phenol resin, and polyimide resin.

Next, the prepared electrospinning solution is electrospun to produce nanofibers (S120).

The electrospinning method is not particularly limited, and may be an electrospinning method that is generally used.

For example, the electrospinning solution is injected into the syringe of an electrospinning apparatus. A voltage of 1 kV to 50 kV is applied to the syringe, and a current collector plate, for example, an aluminum foil, is grounded. When the piston of the syringe is pushed at a certain speed, the electrospinning solution is discharged through the nozzle, and at the same time, nanofibers are stacked in the form of a sheet on the current collector plate by the applied voltage while being continuously produced.

Next, the nanofibers are dried and then calcined (S130) .

The nanofibers produced by the electrospinning process are subjected to a calcination process to remove the polymer binder, and the ceramic nanofibers form nanograins. In addition, due to random stacking of the individual nanofibers, a ceramic nanofiber structure is formed, and pores are formed between the nanofibers.

The step of calcining the nanofibers may be performed at a temperature of 700°C to 1,100°C. When the step of calcining is performed at a temperature within the above range, crystallization of the ceramic nanofibers may be sufficiently achieved, and it is possible to prevent the grain size from increasing excessively.

The method for producing a ceramic nanofiber structure according to one embodiment of the present disclosure may produce a ceramic nanofiber structure having excellent physical properties, such as heat resistance, solvent resistance, and acid resistance/base resistance, from the ceramic precursors through the sol-gel reaction, electrospinning and calcination processes, and may enhance the flexibility of the ceramic nanofiber structure by controlling the size of the grains constituting the ceramic nanofibers.

According to yet another embodiment of the present disclosure, the ceramic nanofiber membrane is produced by a method including steps of: immersing the ceramic nanofiber structure in an inorganic photocatalyst precursor solution to obtain a ceramic nanofiber structure coated with the inorganic photocatalyst precursor; and calcining the ceramic nanofiber structure coated with the inorganic photocatalyst precursor.

The ceramic nanofiber structure may be produced by the above-described method for producing a ceramic nanofiber structure.

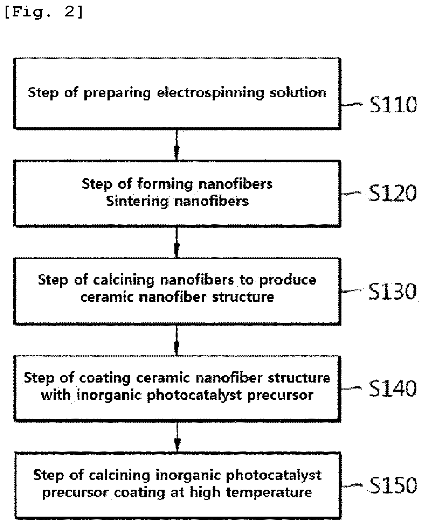

FIG. 2 is a flow chart showing the sequential steps of a method for producing a ceramic nanofiber membrane according to one embodiment of the present disclosure.

Referring to FIG. 2, the method for producing a ceramic nanofiber membrane according to one embodiment of the present disclosure includes steps of: (S110) preparing an electrospinning solution; (S120) forming nanofibers by electrospinning the electrospinning solution; (S130) calcining the nanofibers to produce a ceramic nanofiber structure; (S140) coating the produced ceramic nanofiber structure with an inorganic photocatalyst precursor; and (S150) calcining the resulting inorganic photocatalyst precursor coating layer.

Steps (S110), (S120) and (S130) in FIG. 2 may correspond to steps (S110), (S120) and (S130) in FIG. 1, respectively, and may be performed in the same manner as described above.

According to one embodiment of the present disclosure, the ceramic nanofiber structure coated with the inorganic photocatalyst precursor is obtained by immersing the ceramic nanofiber structure in an inorganic photocatalyst precursor solution (S140).

According to one embodiment of the present disclosure, the method may further include a step of immersing the ceramic nanofiber structure in a polymer solution to obtain a ceramic nanofiber structure internally filled with the polymer component, before the step of obtaining the ceramic nanofiber structure coated with the inorganic photocatalyst precursor. In this case, the method may further include a step of drying the ceramic nanofiber structure under reduced pressure after immersing the ceramic nanofiber structure in the polymer solution. When these steps are performed, either micropores inside each nanofiber composed of a number of grains or surface defects may be filled with the polymer component, and it is possible to prevent the inorganic photocatalyst precursor from penetrating the micropores or surface defects during coating with the inorganic photocatalyst. That is, the inorganic photocatalyst coating layer is formed in the shape of a shell on the top of the surface of each ceramic nanofiber. Thereafter, the polymer component is removed by thermal decomposition in the calcination process, so that the existing micropores may be well retained, which ultimately contribute to improving the flexibility of the ceramic nanofiber membrane.

According to one embodiment of the present disclosure, the polymer solution is not particularly limited, but may contain at least one polymer selected from among cellulose-based resin, polyvinyl chloride resin, polyvinyl alcohol-based resin, polyvinylpyrrolidone-based resin, acrylic resin, vinyl acetate-acrylic acid ester copolymer resin, butyral resin, alkyd resin, epoxy resin, phenol resin, and polyimide resin.

According to one embodiment of the present disclosure, the solution containing the inorganic photocatalyst precursors may be a solution containing: a first inorganic precursor including at least one selected from among titanium (Ti), zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na); and a second inorganic precursor including at least one selected from among zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na) .

As the inorganic photocatalyst precursors, the first inorganic precursor may be used at a concentration of 0.1 M (28.4 g) to 5.0 M (1,421 g), and the second inorganic precursor may be used at a concentration of 0.01 M (3.3 g) to 3.0 M (984 g).

**When** the first inorganic precursor and the second inorganic precursor are used at concentrations within the above specified ranges, it is possible to obtain a ceramic nanofiber membrane having excellent photocatalytic efficiency without significantly reducing the mean or largest pore size of the ceramic nanofiber structure.

**The** step of producing the ceramic nanofiber structure coated with the inorganic photocatalyst precursors may include a drying step after immersing the ceramic nanofiber structure in the solution containing the inorganic photocatalyst precursors. The solution containing the inorganic photocatalyst precursors may further contain a solvent in which the inorganic photocatalyst precursors may be dissolved or dispersed.

Next, the inorganic photocatalyst precursor-coated ceramic nanofiber structure is calcined to form an inorganic photocatalyst coating layer (S150). Specifically, the calcination process may be performed at a temperature of 400°C to 800°C to produce a photocatalyst coating layer of the ceramic nanofiber membrane.

Through the process of calcining the ceramic nanofiber structure, the inorganic photocatalyst coating layer may be uniformly formed on the surface of the ceramic nanofiber structure.

The method for producing a ceramic nanofiber membrane according to one embodiment of the present disclosure may produce a ceramic nanofiber structure having excellent physical properties, such as heat resistance, solvent resistance, and acid resistance/base resistance, from the ceramic precursors through the sol-gel reaction, electrospinning and calcination processes, and may enhance the flexibility of the ceramic nanostructure by controlling the size and mean diameter of grains constituting the ceramic nanofibers. In addition, it is possible to obtain a membrane, which has excellent photocatalytic efficiency while retaining the above-described physical properties, by forming the inorganic photocatalyst coating layer.

**Mode for Invention**

Hereinafter, the present disclosure will be described in more detail with reference to examples. These examples are merely illustrative of the present disclosure, and are not intended to the scope of the present disclosure.

**Production and Testing of Ceramic Nanofiber Structures**

Example 1

A ceramic precursor solution was prepared by mixing a zirconium propoxide solution [1.6 M (524 g), Sigma-Aldrich, USA], yttrium nitrate hexahydrate [0.1 M (53 g), Sigma-Aldrich, USA], tetraethylorthosilicate [TEOS, 0.7 M (142 g), Sigma-Aldrich, USA], polyvinylpyrrolidone [0.08 mM (100 g), Sigma-Aldrich, USA], N,N-dimethylformamide [11 M (793 g), Sigma-Aldrich, USA], and acetic acid [2.8 M (168 g), Sigma-Aldrich, USA]. The ceramic precursor solution was mixed with stirring 30°C until a transparent solution was obtained, thus preparing a sol-type electrospinning solution.

Then, electrospinning was performed in a closed chamber system of an electrospinning apparatus (NanoNC, Korea). Specifically, a voltage was applied and the electrospinning solution was discharged in the direction of an aluminum foil through a conductive stainless needle (20 to 25 G) at a supply rate of 1.0 ml/h.

The acceleration voltage and distance between the needle and the aluminum foil were 15 to 25 kV and 5 to 20 cm, respectively. In addition, the electrospinning process was performed at controlled relative humidity (40±5%) and temperature (25±2°C). The spun ceramic nanofibers were dried in a vacuum oven at 30°C for 12 hours, and then calcined in air at 700 to 1,100°C at a heating rate of 5°C/min for 2 hours to obtain a ceramic nanofiber structure.

Examples 2 to 5 and Comparative Examples 1 to 3

Ceramic nanofiber structures were obtained in the same manner as in Example 1, except that the content of each of zirconium propoxide and TEOS was changed as shown in Table 1 below.

[Table 1]

| | Zirconium propoxide (M) | TEOS (mol% based on 100 mol% of the sum of precursors) |
|---|---|---|
| Example 1 | 1.6 | 30 |
| Example 2 | 1.6 | 50 |
| Example 3 | 1.8 | 30 |
| Example 4 | 1.8 | 50 |
| Example 5 | 2.0 | 30 |
| Comparative Example 1 | 1.6 | 0 |
| Comparative Example 2 | 1.8 | 0 |
| Comparative Example 3 | 2.0 | 0 |

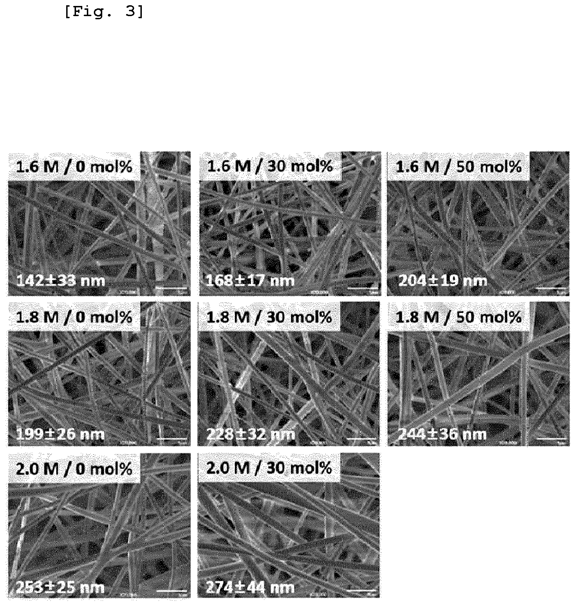

The surfaces of the ceramic nanofiber structures obtained in Examples 1 to 5 and Comparative Examples 1 to 3 were observed with FE-SEM (JSM-6700, Jeol, Japan), and the results of the observation are shown in FIG. 3.

FIG. 3 shows FE-SEM images of the ceramic nanofiber structures produced according to Examples 1 to 5 of the present disclosure and Comparative Examples 1 to 3, and the number shown at the bottom of each image is the mean diameter of the nanofibers.

Referring to FIG. 3, it can be seen that, at the same concentration of the zirconia precursor (ZrP), the mean diameter of the nanofibers was larger when the silica precursor (TEOS) was present than when the silica precursor was absent, and when both the zirconia precursor and the silica precursor were present, the mean diameter of the nanofibers increased as the concentration of the zirconia precursor increased at the same concentration of the silica precursor. In addition, it can be seen that the ceramic nanofiber structure according to one embodiment of the present disclosure had mean diameter of 142 nm to 274 nm.

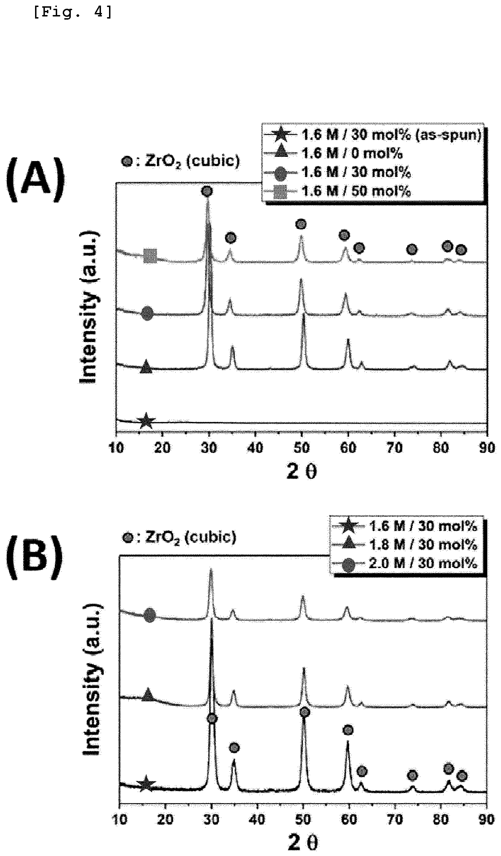

FIG. 4 depicts graphs showing the results of XRD (D/Max 2500 V/PC, Rigaku Corporation, Japan) analysis of the ceramic nanofiber structures produced according to Examples 1 to 5 of the present disclosure and Comparative Example 1. As shown in FIG. 4, the XRD patterns of all the ceramic nanofiber structures were consistent with the XRD pattern of fully stabilized cubic phase zirconia.

The peak positions at $2\theta$ (30.0°, 34.7°, 50.0°, 59.4°, 62.3° and 73.4°) in FIG. 4 correspond respectively to the crystallographic planes (111), (200), (220), (311), (222) and (400) of the cubic phase. It can be seen that, as the concentration of the silica precursor increased, the intensity of the XRD peak decreased and the crystallinity of the zirconia nanofiber decreased (FIG. 3(A)). In addition, it was confirmed that the intensity of the XRD peak decreased as the concentration of the zirconia precursor increased (FIG. 4(B)).

The grain sizes of the ceramic nanofiber structures produced in the Examples of the present disclosure were measured by Scherrer's equation, and the results of the measurement are shown in Table 2 below.

The Scherrer equation is as follows, and may be used to calculate the grain size:

$L = (K\lambda / \beta\cos\theta)$
(L: grain size, K: shape factor, $\lambda$: wavelength, and $\theta$: the angle of the highest peak)

[Table 2]

| | Grain size (nm) |
|---|---|
| Example 1 | 14.8 |
| Example 2 | 13.9 |
| Example 3 | 12.7 |
| Example 4 | 12.4 |
| Example 5 | 12.6 |
| Comparative Example 1 | 16.0 |

(continued)

|  | Grain size (nm) |
|---|---|
| Comparative Example 2 | 15.3 |
| Comparative Example 3 | 14.9 |

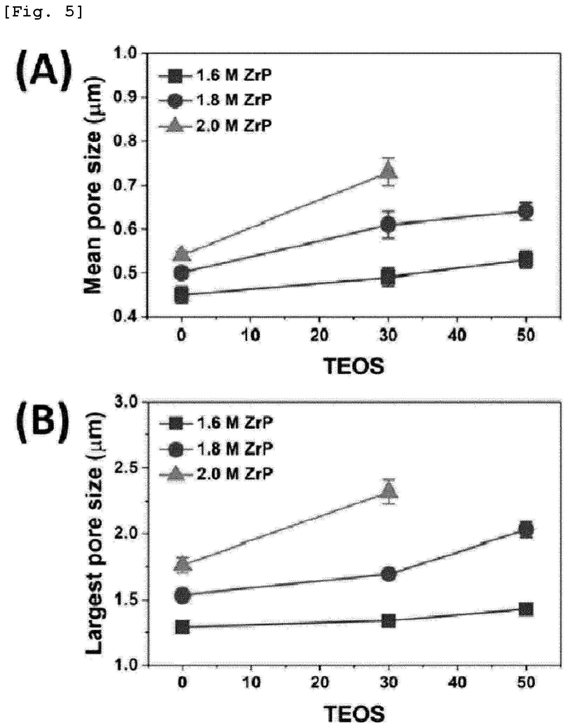

As shown in Table 2 above, it can be confirmed that the grain sizes of the ceramic nanofiber structures according to the Examples of the present disclosure are within the range of 5 nm to 15 nm. The pore sizes were measured using a Capillary Flow Porometer (CFP) specified in ASTM F 316, and the results of the measurement are shown in FIG. 5.

FIG. 5 depicts graphs showing the mean pore size (A) and largest pore size (B) of the ceramic nanofiber structure produced according to each of Examples 1 to 5 of the present disclosure and Comparative Examples 1 to 3.

As shown in FIG. 5, it can be seen that the mean pore size between the nanofibers of the ceramic nanofiber structure increased in proportion to the mean diameter of the nanofibers. That is, as the concentration of the zirconia precursor and the concentration of the silica precursor increased, the mean diameter of the nanofibers increased, and accordingly, the mean pore size between the nanofibers also tended to increase.

As shown in FIG. 5(A), it can be seen that the mean pore size between the ceramic nanofibers was distributed in the range of approximately 0.4 $\mu$m to 0.8 $\mu$m, which corresponds to the pore size of a microfiltration membrane. As shown in FIG. 5(B), the largest pore size between the ceramic nanofibers was distributed in the range of approximately 1.2 $\mu$m to 2.5 $\mu$m, and showed the same pattern as the mean pore size. That is, as the concentration of the zirconia precursor and the concentration of the silica precursor increased, the mean diameter of the nanofibers increased, and thus the largest pore size between the nanofibers also tended to increase.

The flexibilities of the ceramic nanofiber structures produced in the Examples of the present disclosure and the Comparative Examples were measured using a tissue softness analyzer (manufactured by Emtech Electronic). The elastic deformation occurring when each ceramic nanofiber structure was pressed with a force of 0.6N in a taut state was measured (measurement unit: mm/N). That is, the more flexible the sample, the greater the amount of elastic deformation when the same force is applied to the sample.

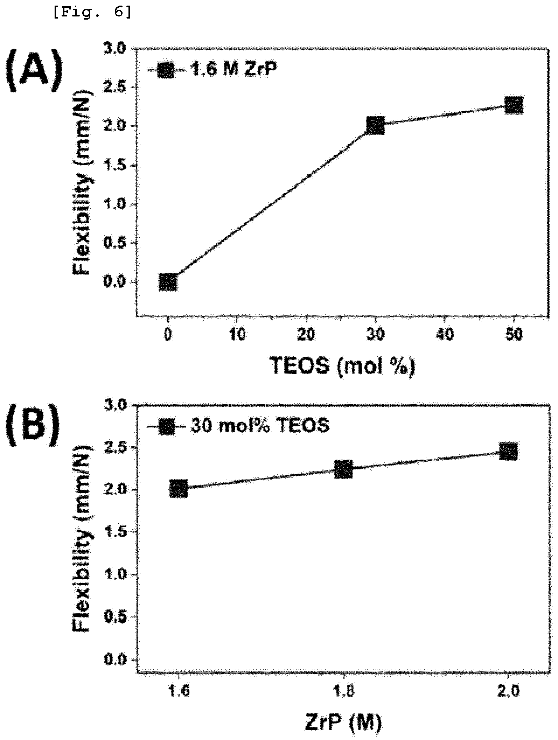

FIG. 6 depicts graphs showing the flexibility depending on the precursor content for each of the ceramic nanofiber structures produced according to each of Examples 1, 2, 3 and 5 of the present disclosure and Comparative Example 1.

**It** was shown that, as the concentration of the silica precursor and the concentration of the zirconia precursor increased, the flexibility of the nanofibers increased. In FIGS. 6(A) and 6(B), the ceramic nanofiber structures according to the Examples of the present disclosure showed an elastic deformation of 1.5 to 2.5 mm/N, proving that they are very flexible and soft as much as a cosmetic tissue (2.9 mm/N) and an experimental tissue (3.0 mm/N).

Meanwhile, when the content of silica in the ceramic nanofibers was in the range of 30 mol% to 50 mol%, the flexibility was the highest, and at this time, the grain size was 12 nm to 15 nm.

Therefore, the inflection point of the flexibility increase slope was near 30 mol% of the silica precursor, and at this time, the grain size was about 14.8 nm.

TEM/EDX analysis was performed on the ceramic nanofiber structures produced in Examples 1 and 2 and Comparative Example 1, and the results of the analysis are shown in Table 3 below.

[Table 3]

|  | Element O | | Element Y | | Element Zr | | Element Si | |
|---|---|---|---|---|---|---|---|---|
|  | wt% | at% | wt% | at% | wt% | at% | wt% | at% |
| Example 1 | 22.13 | 58.78 | 7.08 | 3.38 | 66.16 | 30.83 | 4.63 | 7.01 |
| Example 2 | 22.02 | 57.08 | 8.25 | 3.85 | 62.50 | 28.40 | 7.23 | 10.67 |
| Comparative Example 1 | 13.90 | 47.86 | 8.92 | 5.53 | 77.18 | 46.61 | 0 | 0 |

Referring to Table 3, it can be seen that the ceramic nanofiber structures of the Examples each contain the silicon (Si) element in an amount of 7 at% to 11 at% based on 100 at% of the total elements contained in the ceramic nanofibers.

Water Permeability

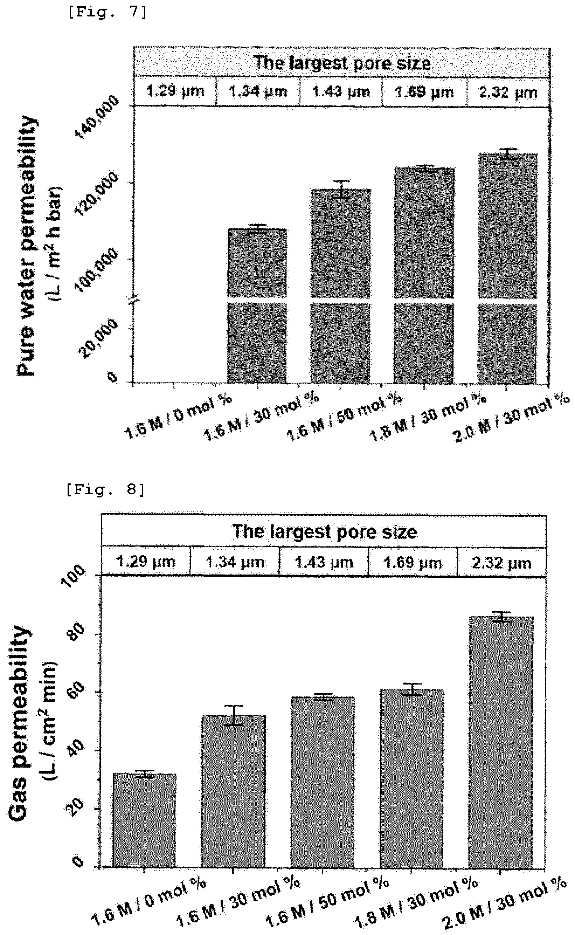

The water permeability of the nanofiber structure produced in each of Examples 1, 2, 3 and 5 and Comparative Example 1 was measured in the following way. That is, each nanofiber structure (diameter: 5 cm) was mounted on a module and connected to a conventional water treatment membrane evaluation device (manufactured by Sepratech). Pure water was supplied at a pressure of 1 bar and the amount of permeated water was measured with an electronic scale, and the unit of flow rate was expressed as L/m$^2$ h bar. (L: volume of permeated water, m$^2$: membrane area, h: time, and bar: pressure). The results of the measurement are shown in FIG. 7.

As shown in FIG. 7, it can be seen that the largest pore size between the nanofibers of the nanofiber structure of each of the Examples was 1.29 $\mu$m to 2.32 $\mu$m, and the interconnectivity of the nanofibers was excellent, suggesting that the nanofiber structure had very high water permeability. That is, the water permeability of the ceramic nanofiber structure according to each of the Examples of the present disclosure was 100,000 to 130,000 L/m$^2$ h bar, whereas the bulk-type microfiltration or ultrafiltration membrane obtained by sintering of ceramic powder showed a value 250 to 600 L/m$^2$ h, which is much lower that of the ceramic nanofiber structure. On the other hand, Comparative Examples 1, 2 and 3 have a composition containing no silica component, and have the property of being easily broken due to high brittleness. As a result, a phenomenon occurred in which the membrane was broken by the pressure of the fluid (water) immediately after the water treatment membrane evaluation device was operated. That is, the water permeability of the structure of each of Comparative Examples 1 to 3 could not be measured because of high brittleness thereof.

Air Permeability

The gas permeability of the nanofiber structure produced in each of Examples 1, 2, 3 and 5 and Comparative Example 1 was measured using a capillary flow porometer (CFP), and the results of the measurement are shown in FIG. 8.

As shown in FIG. 8, the gas permeability of the ceramic nanofiber structure according to each of the Examples of the present disclosure or the Comparative Example was 30 to 80 L/cm$^2$ min. However, the gas permeability of the bulk-type microfiltration or ultrafiltration membrane obtained by sintering ceramic powder stayed at a value of 0.50 L/cm$^2$ min, which was much lower than that of the ceramic nanofiber structure.

Nanoparticle Rejection (%)

The nanoparticle rejection (%) of the ceramic nanofiber structure produced in each of Examples 1 to 3 and 5 and Comparative Example 1 was measured using polymer nanoparticles having sizes of 0.2 $\mu$m and 0.5 $\mu$m (purchased from Polysciences; product name: Polystyrene blue dyed microsphere). Specifically, the polymer nanoparticles were dispersed in water at a constant concentration (250 ppm). Each of the produced ceramic nanofiber structures was mounted on a vacuum filter device for a laboratory, and the polymer nanoparticles were filtered from the polymer nanoparticle dispersion under reduced pressure. The initial concentration of the polymer nanoparticle dispersion and the concentration of the polymer nanoparticle dispersion after filtration were measured, and the rejection (%) was calculated according to Equation 1 below.

$$[\text{Equation 1}]$$

$$\text{Rejection (\%)} = [1-(C/C_0)] \times 100 \quad (C_0: \text{initial concentration}, C: \text{concentration after filtration})$$

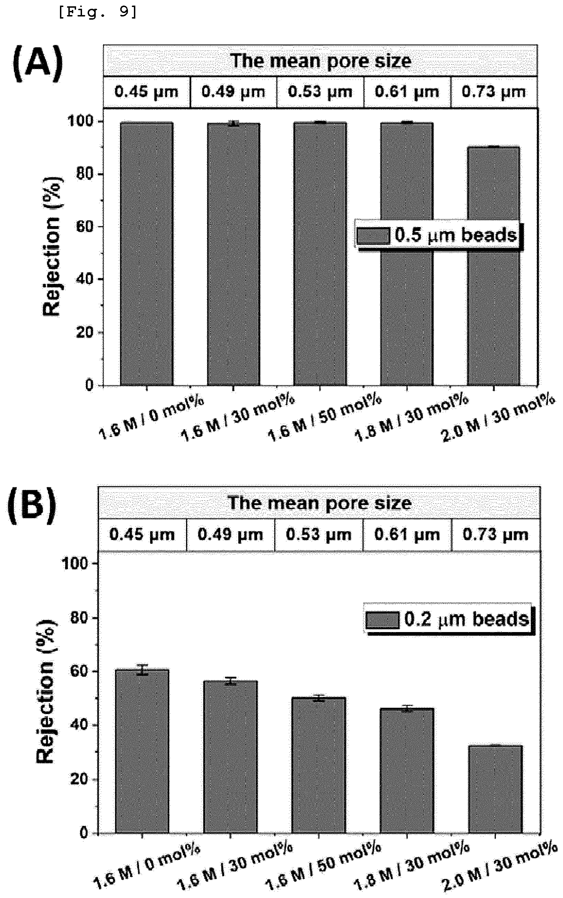

As shown in FIG. 9, it can be seen that the nanofiber structure of each Example had a mean pore size of 0.49 $\mu$m to 0.73 $\mu$m, and the nanoparticle rejection (%) increased as the mean pore size decreased. For the polymer nanoparticles having a size of 0.5 $\mu$m, Comparative Example 1 and Examples 1 to 3 showed a rejection of about 99.5%, and Example 5 showed a rejection of about 90%.

Considering the mean pore size distribution (0.49 $\mu$m to 0.73 $\mu$m) of the nanofiber structure, it can be expected that the rejection (%) of polymer nanoparticles having a size of 0.2 $\mu$m will be very low. However, the path through which nanoparticles permeate is very complicated due to the complex tortuosity of the nanofiber structure. For this reason, it can be seen that, although the pore size of the ceramic nanofiber structure is relatively large compared to the size of the nanoparticles, the ceramic nanofiber structure functions as a membrane for separation/removal. Comparative Example 1 having the smallest pore size showed a rejection of about 60%, and in the case of Examples 1 to 5, the rejection (%) tended to gradually decrease as the pore size increased.

As mentioned above, Comparative Example 1 has a composition containing no silica and is highly brittle, and thus it was impossible to measure the water permeability thereof in the water permeability test (due to the pressure of the fluid). However, in the rejection test, the nanofiber structure was mounted on a laboratory filter device and filtration of the polymer nanoparticles under reduced pressure was performed, and fortunately, serious damage to the nanofiber structure did not occur, and thus a valid rejection value was obtained. The reason why Comparative Example 1 shows a somewhat higher rejection (%) (particularly, for 0.2 $\mu$m nanoparticles) than Examples 1 to 5 is that the mean pore size between the nanofibers thereof is the smallest due to the small diameter of the nanofibers. Although Comparative Example 1 showed the highest rejection (about 60%) in FIG. 9(B), the flexibility test (FIG. 6) and the water permeability test (FIG. 7) showed that Comparative Example 1 was very brittle and thus was impossible to actually use as a membrane for water purification.

As described above, the ceramic nanofiber structure according to one embodiment of the present disclosure may exhibit excellent flexibility. In particular, as the concentration of the second ceramic precursor increases, the mean diameter of the ceramic nanofiber slightly increases and the size of the grains contained in the ceramic nanofiber gradually decreases, and accordingly, the ceramic nanofiber structure may exhibit excellent flexibility compared to a conventional ceramic nanofiber structure.

**Production and Testing of Ceramic Nanofiber Membranes**

Example 6

The ceramic nanofiber structure obtained in Example 1 above was immersed in a polyvinyl alcohol solution (2%) and dried under reduced pressure. Next, the ceramic nanofiber structure was immersed in a sol solution containing 0.1 M (28.4 g) of a first inorganic photocatalyst precursor (tetra titanium isopropoxide) and 0.01 M (3.3 g) of a second inorganic photocatalyst precursor (zirconium propoxide) and dried under reduced pressure to form a photocatalyst precursor coating layer. Thereafter, calcination was performed at 500°C to obtain a ceramic nanofiber membrane having the inorganic photocatalyst coating layer formed thereon.

Example 7

A ceramic nanofiber membrane was obtained in the same manner as in Example 6, except that the first inorganic photocatalyst precursor (tetra titanium isopropoxide) was used in an amount of 0.5 M (142 g) instead of 0.1 M (28.4 g) in the production of the inorganic photocatalyst.

Example 8

A ceramic nanofiber membrane was obtained in the same manner as in Example 6, except that the first inorganic photocatalyst precursor (tetra titanium isopropoxide) was used in an amount of 1.0 M (284 g) instead of 0.1 M (28.4 g) in the production of the inorganic photocatalyst.

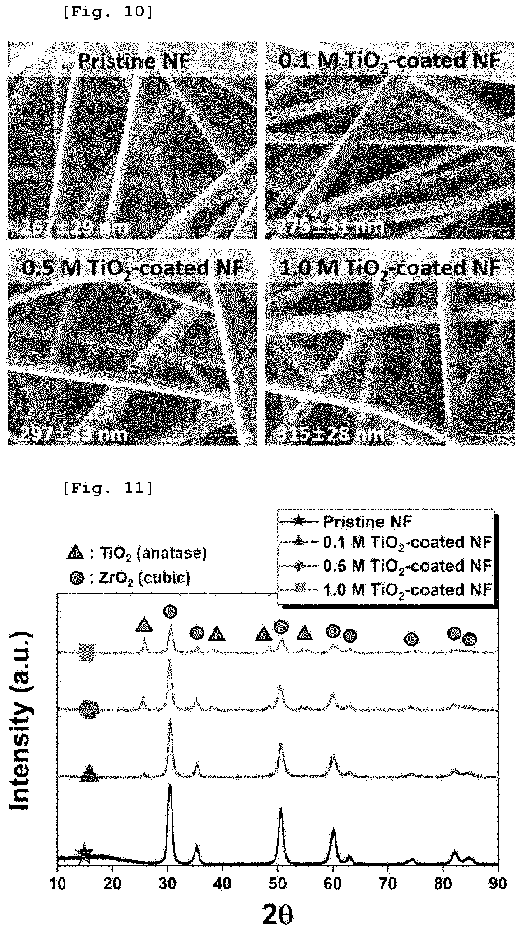

The surface of each of the ceramic nanofiber structure produced in Example 1 and the ceramic nanofiber membranes obtained in Examples 6 to 8 was observed with FE-SEM (JSM-6700, Jeol, Japan), and the results of the observation are shown in FIG. 10.

FIG. 10 shows FE-SEM images of the ceramic nanofiber structure produced according to Example 1 of the present disclosure and the inorganic photocatalyst precursor-coated ceramic nanofiber membranes produced according to Examples 6 to 8 of the present disclosure, and the number shown at the bottom of each image is the mean diameter of each of the ceramic nanofiber structure before surface modification and the ceramic nanofibers having the photocatalytic $TiO_2$ inorganic coating layer formed thereon.

Referring to FIG. 10, it can be seen that the diameter of the $TiO_2$-coated ceramic nanofiber increased as the amount of $TiO_2$ precursor used increased. Thereby, it can be seen that, when a ceramic nanofiber membrane is produced by the method according to one embodiment of the present disclosure, it is possible to produce a ceramic nanofiber membrane uniformly surface-modified with an inorganic photocatalyst.

In addition, it can be seen that the thickness of the inorganic photocatalyst coating layer of the ceramic nanofiber membrane according to each of Examples 6 to 8 of the present disclosure was about 4 nm to about 24 nm.

FIG. 11 shows the results of XRD (D/Max 2500 V/PC, Rigaku Corporation, Japan) analysis of each of the ceramic nanofiber structure produced according to Example 1 of the present disclosure and the ceramic nanofiber membranes produced according to Examples 6 to 8 of the present disclosure.

As shown in FIG. 11, it can be seen that the XRD patterns of all the ceramic nanofiber membranes of Examples 6 to 8 were consistent not only with the XRD pattern of the cubic phase stabilized zirconia, but also with the XRD pattern of the anatase phase $TiO_2$. In addition, it can be confirmed that, as the concentration of the $TiO_2$ precursor increased, the height of the XRD peak corresponding to zirconia decreased and the intensity of the XRD peak corresponding to $TiO_2$ increased. Thereby, it can be seen that the crystallinity and grain size of $TiO_2$ increased as the concentration of the $TiO_2$ precursor increased.

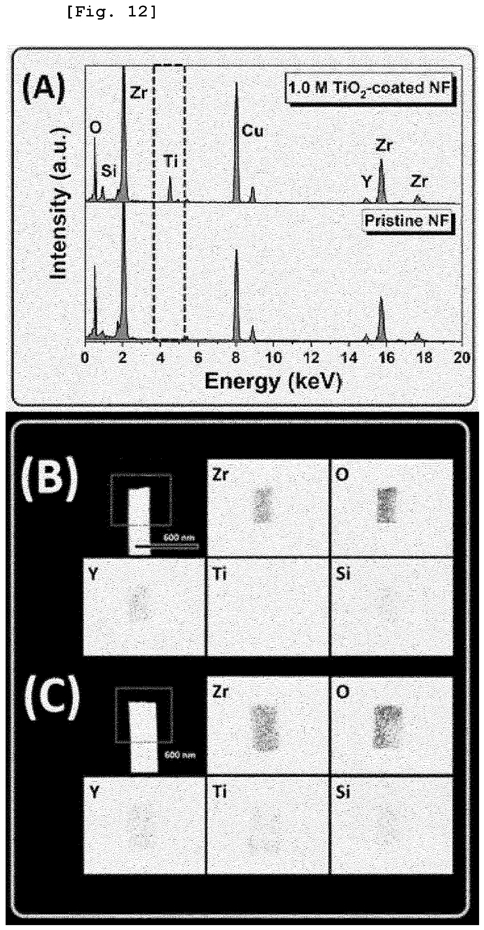

FIG. 12 shows the results of EDS mapping using HR-TEM for the ceramic nanofiber structure produced in Example 1 of the present disclosure and the ceramic nanofiber membranes produced in Examples 6 to 8 of the present disclosure (JEM 2100F, Jeol, Japan).

From FIG. 12, it can be seen that the photocatalyst $TiO_2$ was present uniformly on the surface of the ceramic nanofiber constituting the ceramic nanofiber structure.

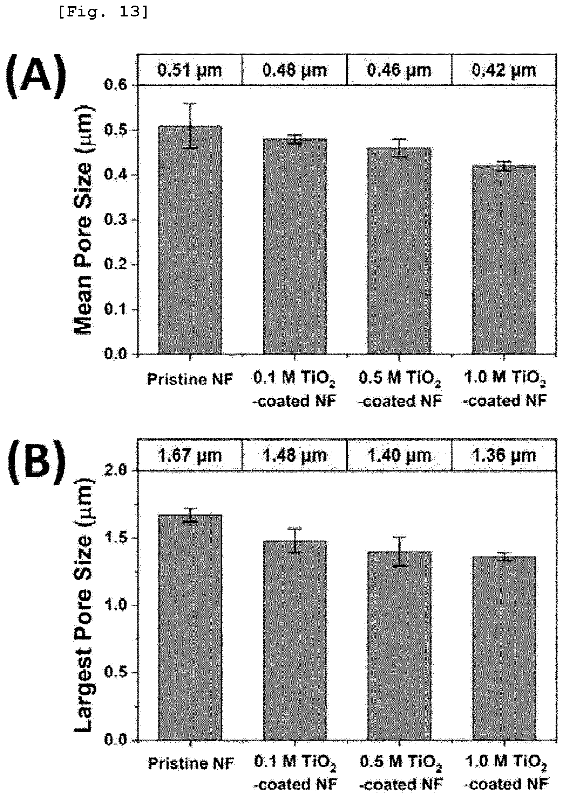

The pore size of each of the ceramic nanofiber structure produced in Example 1 and the ceramic nanofiber membranes produced in Examples 6 to 8 was measured using a capillary flow porometer specified in ASTM F 316, and the results of the measurement are shown in FIG. 13.

FIG. 13 depicts graphs showing the mean pore size (A) and largest pore size (B) of each of the ceramic nanofiber structure produced in Example 1 of the present disclosure and the ceramic nanofiber membranes produced according to Examples 6 to 8.

As shown in FIG. 13, it was confirmed that the mean pore size of the ceramic nanofiber membrane of each Example became smaller than the mean pore size of the ceramic nanofiber structure of Example 1 as the inorganic photocatalyst coating layer was formed thereon. That is, as the concentration of the inorganic photocatalyst precursor solution increases, the thickness of the photocatalyst coating layer increases, which serves to generally reduce the pore size of the ceramic nanofiber structure.

As shown in FIG. 13(A), the mean pore size between the nanofibers of the ceramic nanofiber structure of Example 1 was about 0.51 μm, and as the photocatalytic nanoparticle coating layer was formed, the mean pore size of the ceramic nanofiber membrane of each Example decreased in the range of about 0.48 μm to about 0.42 μm. As shown in FIG. 13(B), the largest pore size of the ceramic nanofiber membrane also showed the same pattern as the mean pore size thereof. That is, as the concentration of the inorganic photocatalyst precursor solution increased, the largest pore size of the ceramic nanofiber membrane also tended to decrease.

Rejection Test

Using the ceramic nanofiber structure produced in Example 1 and the ceramic nanofiber membranes produced in Examples 6 to 8, a rejection test was performed as follows. Specifically, polymer nanoparticles (0.5 μm; purchased from Polysciences; product name: Polystyrene blue dyed microsphere) were dispersed in water at a constant concentration (250 ppm). Each of the produced $TiO_2$-coated ceramic nanofiber structures was mounted on a vacuum filter device for a laboratory, and the polymer nanoparticles were filtered from the polymer nanoparticle dispersion under reduced pressure. The initial concentration of the polymer nanoparticle dispersion and the concentration of the polymer nanoparticle dispersion after filtration were measured, and the rejection (%) was calculated according to Equation 1 below.

[Equation 1]

$$\text{Rejection (\%)} = [1-(C/C_0)] \times 100 \quad (C_0: \text{ initial concentration, } C: \text{ concentration after filtration})$$

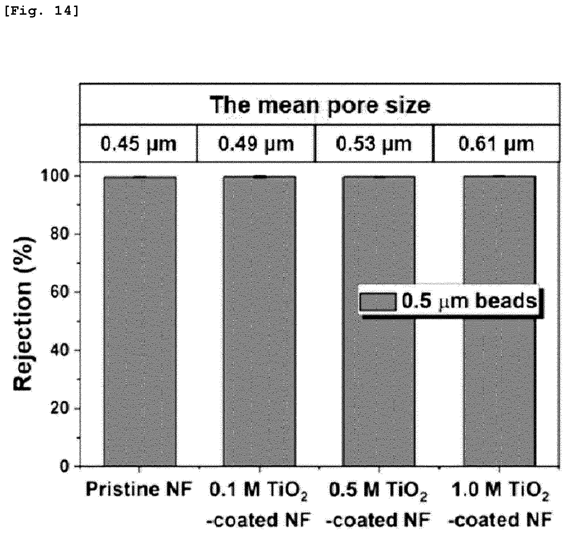

FIG. 14 shows the mean pore size (A) and rejection (%) of each of the ceramic nanofiber structure produced in Example 1 of the present disclosure and the ceramic nanofiber structures produced according to Examples 6 to 8.

As shown in FIG. 14, it can be seen that, as the amount of inorganic photocatalyst coated increased, the mean pore size gradually decreased, and the rejection (%) of the polymer nanoparticles gradually increased. This means that the separation/rejection function as a membrane was improved.

Degradation Performance Test for Organic Matters

Using the ceramic nanofiber structure produced in Example 1 and the ceramic nanofiber membranes produced in Examples 6 to 8, degradation performance for humic acid (HA), methylene blue (MB) and tetracycline (TC) was tested.

Specifically, a solution of each of the three organic matters (20 mg/L) and the $TiO_2$-coated ceramic nanofiber structure were placed in a glass beaker and irradiated with a UV light source (30 W). The initial concentration of the organic matter solution and the concentration of the organic matter solution after degradation at each time point were measured with a UV-vis spectrophotometer, and the photodegradation rate (%) of each of the organic matters was calculated by Equation 2 below.

[Equation 2]

$$\text{Photodegradation rate (\%)} = [1-(C/C_0)]\times100 \quad (C_0: \text{initial concentration, } C: \text{concentration after degradation})$$

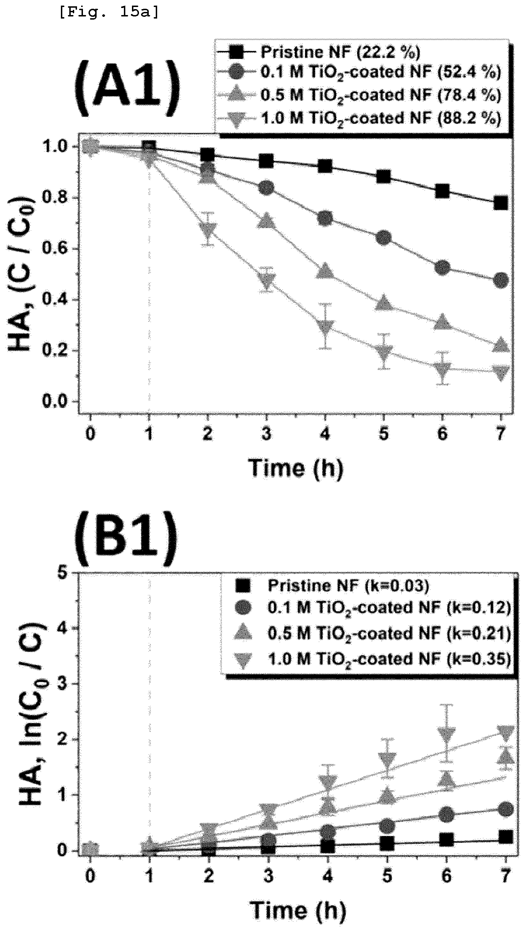

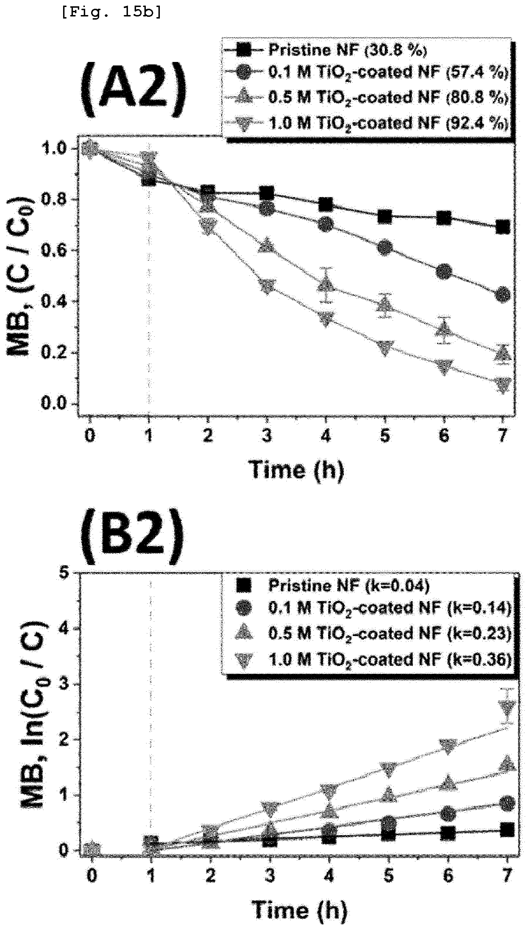

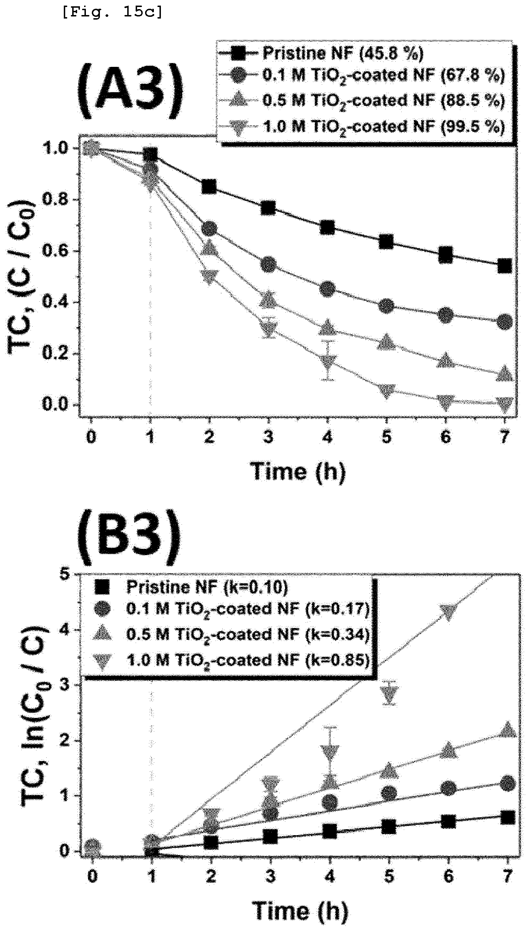

FIGS. 15a to 15c are graphs showing photodegradation rate (%) and photodegradation rate constant (expressed as k value) depending on light irradiation time for each of the ceramic nanofiber structure produced in Example 1 of the present disclosure and the ceramic nanofiber membranes produced according to Examples 6 to 8 of the present disclosure. That is, depending on the light irradiation time, the ratio of the concentration at each time point (C) to the initial concentration (Co) of the test solution, $(C/C_0)$, was calculated and expressed as the photodegradation rate (%), and a function related to the photodegradation rate constant was graphically expressed by taking the logarithm of the Co/C value.

Referring to FIGS. 15a to 15c, it can be seen that the photodegradation rates (%) of all the tested organic matters increased over time, and in particular, the photodegradation rate (%) increased as the inorganic photocatalyst content increased. In particular, in the case of the ceramic nanofiber membrane of Example 8, 99.5% of the tetracycline was removed after 6 hours of light irradiation.

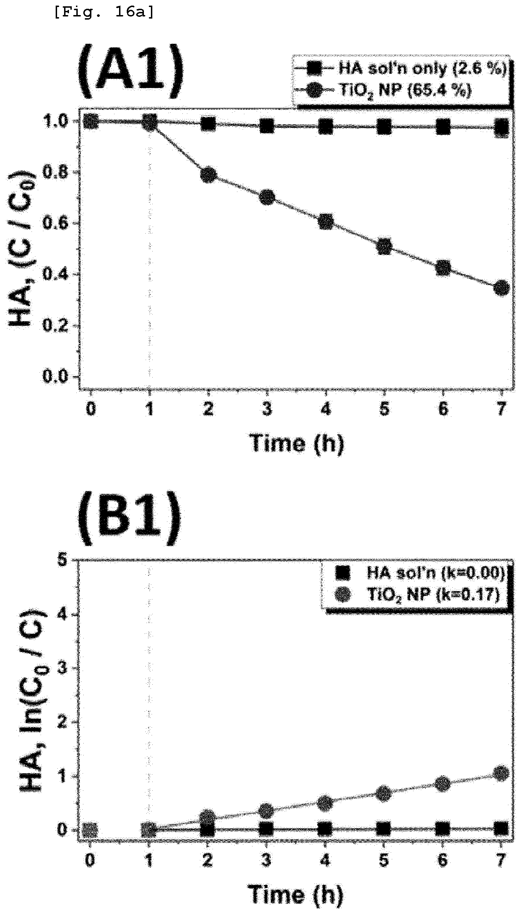

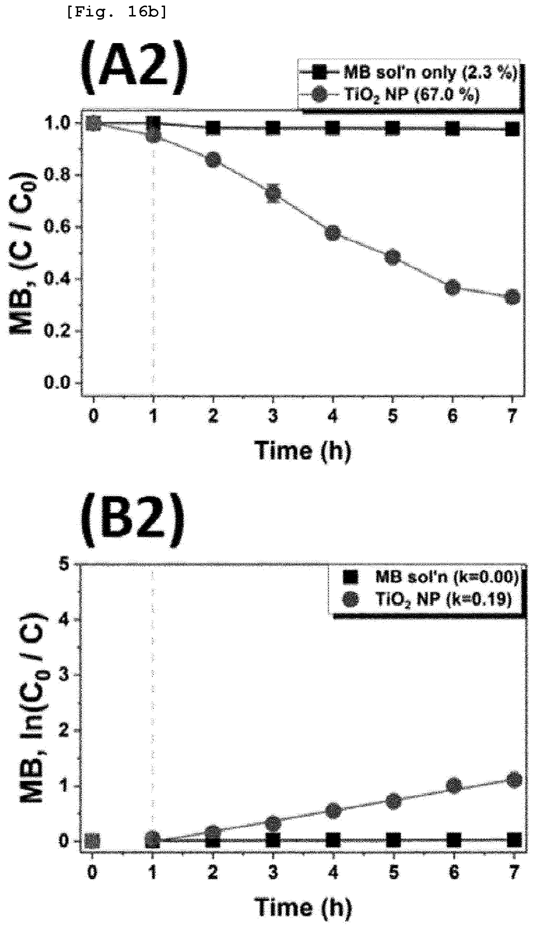

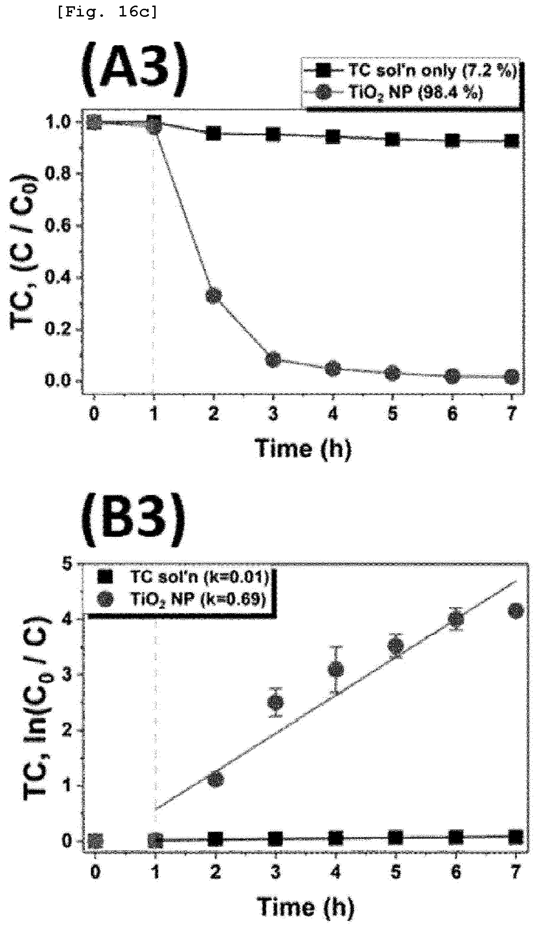

FIGS. 16a to 16c show the photodegradation rates (%) and photodegradation rate constants (k) of (1) each test organic matter solution alone and (2) each test organic matter solution containing $TiO_2$ nanopowder. The test organic matter solutions alone showed very low photodegradation rates (%) even when subjected to 6 hours of light irradiation (HA: 2.6%, MB: 2.3%, and TC: 7.2%). In order to calculate the photodegradation rate (%) and photodegradation rate constant (k) of the test organic matter solution containing $TiO_2$ nanopowder, the weights of the ceramic nanofibers before and after $TiO_2$ coating were measured. As a result, it was confirmed that, in the case of Example 8 having the highest concentration, about 4 mg of $TiO_2$ was generated in the ceramic nanofiber structure. Thus, 5 mg of $TiO_2$ nanopowder was added to each test organic matter solution and the same photodegradation test as described above was performed.

Referring to FIGS. 15a to 15c and 16a to 16c, for the organic matter solutions HA and MB, the organic matter solution containing the $TiO_2$-coated nanofiber structure showed a higher photodegradation rate (%) than the organic matter solution containing $TiO_2$ nanopowder, but for TC, the organic matter solution containing $TiO_2$ nanopowder showed a higher photodegradation rate (%) up to 4 hours, but after 5 hours, the photodegradation rates (%) of the two sample solutions reached about 99.5% and converged to almost 100%. Therefore, it can be seen that the organic matter solution containing the $TiO_2$-coated nanofiber structure exhibits a relatively higher photodegradation rate (%) and photodegradation rate constant (k) than the organic matter solution containing $TiO_2$ nanopowder.

Thereby, it can be confirmed that the ceramic nanofiber membrane according to one embodiment of the present disclosure has very good performance as a membrane for physical removal and photodegradation of water pollutants.

Photocatalytic Performance Test following Reuse

The photocatalytic performance following the repeated reuse (up to 6 times) of the ceramic nanofiber membrane produced in Example 8 was tested. To this end, the measurement of photodegradation rates (%) of humic acid (HA), methylene blue (MB), and tetracycline (TC) by 6 hours of light irradiation per measurement was performed six times continuously, and the change in photodegradation rate (%) of the organic matter solution containing the $TiO_2$ photocatalyst-modified ceramic nanofiber structure was measured. The test method was the same as the above-described photocatalytic performance test for the organic matters. However, after the 6-hour photodegradation test, a step of washing the sample with ultrapure water was performed, and then the photodegradation test was performed.

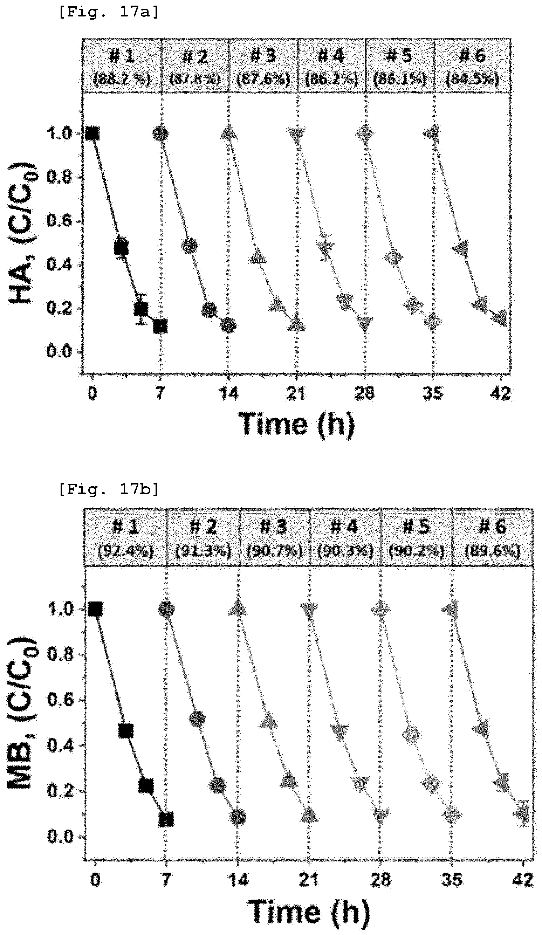

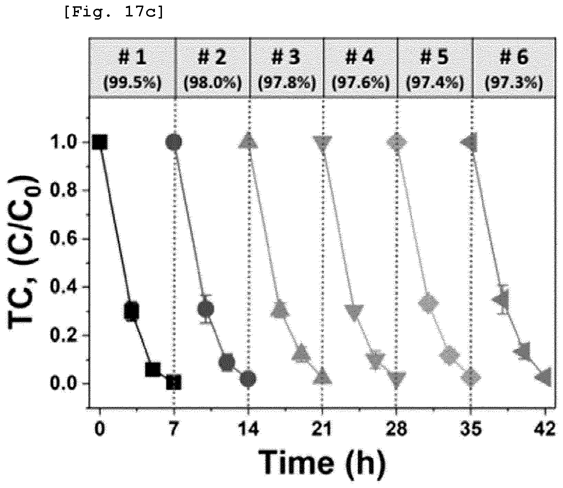

FIGS. 17a to 17c are graphs showing the photocatalytic efficiency depending on the number of uses of the ceramic nanofiber membrane produced according to Example 8 of the present disclosure.

As shown in FIGS. 17a to 17c, the amount of decrease in the photodegradation rate (%) was very small even after the ceramic nanofiber membrane was used repeatedly 6 times for all the tested organic matters (HA: 3.7% decrease, MB: 2.8% decrease, and TC: 2.2% decrease). In particular, the photodegradation rate (%) of tetracycline decreased by only about 2.2%. This means that the original photocatalytic performance of the ceramic nanofiber membrane was well retained without significant loss even though the same photodegradation test was performed six times continuously. Thereby, it can be seen that the ceramic nanofiber membrane according to one embodiment of the present disclosure can be well retained without loss of photocatalytic efficiency thereof even when it is repeatedly used as a membrane for photodegradation of organic matter.

Evaluation of Air Filtration Efficiency of Ceramic Nanofibers

The ceramic nanofiber structure produced in Example 5 was mounted on an air filtration efficiency measuring device (TSI Corporation, 8130), and NaCl particles (mean particle size: 60 nm) were generated and supplied thereto at a flow rate of 3 L/min. The air concentrations of the NaCl particles before and after filtration by the ceramic nanofiber structure were compared, and a filtration efficiency of 97.9% was derived. In addition, the pressure difference (i.e., pressure reduction) between before and after filtration was measured to be 10.7 mmH$_2$O (see 1 bar = 10,197 mmH$_2$O). That is, the ceramic nanofiber structure according to one embodiment of the present disclosure was measured to have high filtration efficiency for nano-sized particles as well as low pressure reduction, suggesting that the ceramic nanofiber structure has very good performance as an air purification filter.

Although the present disclosure has been described above with reference to the illustrated drawings, it will be obvious that the present disclosure is not limited by the embodiments disclosed in the present specification and the drawings, and various modifications can be made by those skilled in the art without departing from the scope of the technical spirit of the present disclosure. In addition, although the effect resulting from the configuration of the present disclosure has not been explicitly described in the description of the Examples of the present disclosure, it is obvious that the effect predictable based on the configuration should also be recognized.

**Claims**

1. A ceramic nanofiber structure comprising ceramic nanofibers which contain a first ceramic component and a second ceramic component and have a mean diameter of 100 nm to 300 nm and a grain size of 5 nm to 15 nm, wherein a mean pore size between the ceramic nanofibers is 0.4 $\mu$m to 0.8 $\mu$m.

2. The ceramic nanofiber structure of claim 1, wherein the largest pore size between the ceramic nanofibers is 1.2 $\mu$m to 2.5 $\mu$m.

3. The ceramic nanofiber structure of claim 1, wherein

   the first ceramic component comprises at least one selected from among zirconium (Zr), titanium (Ti), carbon (C), aluminum (Al), palladium (Pd), sulfur (S), chlorine (Cl), calcium (Ca), nickel (Ni), copper (Cu), Gallium (Ga), selenium (Se), silver (Ag), tin (Sn), zinc (Zn), manganese (Mn), chromium (Cr), magnesium (Mg), phosphorus (P), Boron (B), strontium (Sr), cobalt (Co), antimony (Sb), praseodymium (Pr), oxygen (O), nitrogen (N), and sodium (Na), and
   the second ceramic component comprises: an amorphous ceramic material containing silicon (Si); and at least one selected from among titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na).

4. The ceramic nanofiber structure of claim 1, wherein the ceramic nanofibers contain the second ceramic component in an amount of 10 to 50 mol%.

5. The ceramic nanofiber structure of claim 1, wherein the ceramic nanofibers further contain at least one ceramic stabilizing additive different from the first ceramic component and selected from among yttrium (Y), carbon (C), aluminum (Al), titanium (Ti), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na).

6. The ceramic nanofiber structure of claim 5, wherein the ceramic nanofibers contain yttria-stabilized zirconia-silica.

7. A ceramic nanofiber membrane comprising:

   the ceramic nanofiber structure of claim 1; and
   an inorganic photocatalyst coating layer.

8. The ceramic nanofiber membrane of claim 7, wherein the inorganic photocatalyst coating layer comprises:

   a first inorganic precursor comprising at least one selected from among titanium (Ti), zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na); and

a second inorganic precursor comprising at least one selected from among zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na) .

9. The ceramic nanofiber membrane of claim 7, wherein the inorganic photocatalyst coating layer is formed on a surface of each of the ceramic nanofibers constituting the ceramic nanofiber structure.

10. The ceramic nanofiber membrane of claim 7, wherein the inorganic photocatalyst coating layer has a thickness of 1 nm to 200 nm.

11. A method for producing the ceramic nanofiber structure according to claim 1, the method comprising steps of:

preparing an electrospinning solution containing a first ceramic precursor, a second ceramic precursor and a polymer binder;
forming nanofibers by electrospinning the electrospinning solution; and
calcining the nanofibers.

12. The method of claim 11, wherein the electrospinning solution contains the first ceramic precursor and the second ceramic precursor at a molar ratio of 9:1 to 5:5.

13. The method of claim 11, wherein

the first ceramic precursor comprises at least one selected from among
zirconium (Zr), titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na), and
the second ceramic precursor comprises: an amorphous ceramic material containing silicon (Si); and at least one selected from among titanium (Ti), carbon (C), aluminum (Al), palladium (Pd), sulfur (S), chlorine (Cl), calcium (Ca), nickel (Ni), copper (Cu), gallium (Ga), selenium (Se), silver (Ag), tin (Sn), zinc (Zn), manganese (Mn), chromium (Cr), magnesium (Mg), phosphorus (P), boron (B), strontium (Sr), cobalt (Co), antimony (Sb), praseodymium (Pr), oxygen (O), nitrogen (N), and sodium (Na).

14. The method of claim 11, wherein the electrospinning solution further contains a ceramic stabilizing additive precursor.

15. The method of claim 11, wherein the step of calcining is performed at a temperature of 700°C to 1,100°C.

16. A method for producing the ceramic nanofiber membrane according to claim 7, the method comprising steps of:

obtaining a ceramic nanofiber structure coated with an inorganic photocatalyst precursor by immersing the ceramic nanofiber structure according to claim 1 in an inorganic photocatalyst precursor solution; and
calcining the ceramic nanofiber structure coated with the inorganic photocatalyst precursor.

17. The method of claim 16, further comprising a step of immersing the ceramic nanofiber structure in a polymer solution to obtain a ceramic nanofiber structure internally filled with the polymer component, before the step of obtaining the ceramic nanofiber structure coated with the inorganic photocatalyst precursor.

18. The method of claim 16, wherein the step of calcining the ceramic nanofiber structure coated with the inorganic photocatalyst precursor is performed at a temperature of 400°C to 800°C.

19. The method of claim 16, wherein the inorganic photocatalyst precursor solution comprises:

a first inorganic precursor comprising at least one selected from among titanium (Ti), zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na); and
a second inorganic precursor comprising at least one selected from among zirconium (Zr), zinc (Zn), oxygen (O), silicon (Si), lead (Pd), tungsten (W), aluminum (Al), copper (Cu), magnesium (Mg), carbon (C), cesium (Ce), yttrium (Y), manganese (Mn), tin (Sn), chromium (Cr), nickel (Ni), phosphorus (P), boron (B), strontium (Sr), cobalt (Co), antimony (Sb), praseodymium (Pr), and sodium (Na) .

20. The method of claim 19, wherein the first inorganic precursor is contained at a concentration of 0.1 M to 5.0 M, and the second inorganic precursor is contained at a concentration of 0.01 M to 3.0 M.

[Fig. 1]

| Step of preparing electrospinning solution | — S110 |
| Step of forming nanofibers | — S120 |
| Step of calcining nanofibers | — S130 |

[Fig. 2]

```
┌─────────────────────────────────────────┐
│   Step of preparing electrospinning solution │ ─ S110
└─────────────────────────────────────────┘
                    │
                    ▼
┌─────────────────────────────────────────┐
│        Step of forming nanofibers          │ ─ S120
│           Sintering nanofibers             │
└─────────────────────────────────────────┘
                    │
                    ▼
┌─────────────────────────────────────────┐
│   Step of calcining nanofibers to produce   │ ─ S130
│        ceramic nanofiber structure          │
└─────────────────────────────────────────┘
                    │
                    ▼
┌─────────────────────────────────────────┐
│  Step of coating ceramic nanofiber structure │ ─ S140
│    with inorganic photocatalyst precursor    │
└─────────────────────────────────────────┘
                    │
                    ▼
┌─────────────────────────────────────────┐
│    Step of calcining inorganic photocatalyst │ ─ S150
│     precursor coating at high temperature    │
└─────────────────────────────────────────┘
```

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

(A)

| 0.51 μm | 0.48 μm | 0.46 μm | 0.42 μm |

(B)

| 1.67 μm | 1.48 μm | 1.40 μm | 1.36 μm |

[Fig. 14]

[Fig. 15a]

[Fig. 15b]

[Fig. 15c]

[Fig. 16a]

[Fig. 16b]

**(A2)**

**(B2)**

[Fig. 16c]

[Fig. 17a]

[Fig. 17b]

[Fig. 17c]

**EP 3 939 693 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190029146
- KR 1020190128757
- KR 1020190128761